# EUROPEAN PATENT APPLICATION

(11) **EP 4 650 770 A1**
(43) Date of publication of application: **19.11.2025**
(21) Application number: 24853134.5
(22) Date of filing: 02.02.2024
(51) Int. Cl.: G01N 30/02, G01N 30/06, G01N 30/34

(54) **METHOD FOR CONSTRUCTING CHICORY-PORIA COMPOUND FINGERPRINT, AND FINGERPRINT AND USE THEREOF**

(30) Priority: 11.08.2023 CN 202311014248
(71) Applicant: Beijing University of Chinese Medicine, Beijing 100029 (CN); Zhiqi Health Industry (Shandong) Group Co., Ltd, Jinan, Shandong 250013 (CN)
(72) Inventor: ZHANG, Bing, Beijing 100029 (CN); LIN, Zhijian, Beijing 100029 (CN); WANG, Yu, Beijing 100029 (CN); LI, Yaolei, Beijing 100029 (CN); HAN, Yu, Beijing 100029 (CN)
(74) Representative: RGTH
(86) International application number: PCT/CN2024/075544
(87) International publication number: WO 2025/035717

(57) **Abstract**

The present disclosure discloses a method for constructing a fingerprint chromatogram of a Ju-Ling herbal compound, including: (1) preparing the Ju-Ling herbal compound into a test solution; (2) preparing a mixed reference substance solution using chlorogenic acid, 6'-O-β-D-glucosylgentiopicroside, swertiamarin, gentiopicroside, sweroside, 3-O-caffeoylshikimic acid, neoastilbin, astilbin, rutin, isoastilbin, isochlorogenic acid C, quercitrin, kaempferol-3-O-rutinoside, and narcissin; and (3) separately injecting the test solution and the mixed reference substance solution into a high-performance liquid chromatograph, and performing similarity analysis on chromatograms obtained to obtain the fingerprint chromatogram of the Ju-Ling herbal compound. The present disclosure also provides the fingerprint chromatogram of the Ju-Ling herbal compound obtained by the method and its use in identifying and/or evaluating the quality of the Ju-Ling herbal compound. The fingerprint chromatogram of the Ju-Ling herbal compound according to the present disclosure could comprehensively, objectively, and accurately test and evaluate the quality of the Ju-Ling herbal compound, thereby ensuring the safety and efficacy of medication for patients.

## Description

### CROSS-REFERENCE TO RELATED APPLICATION

This application claims priority to the Chinese patent application filed with the China National Intellectual Property Administration on August 11, 2023, with an application No. 202311014248.9 and titled "Construction method of fingerprint chromatogram of Ju-Ling herbal compound, and fingerprint chromatogram and use thereof", the entire contents of which are incorporated herein by reference.

### TECHNICAL FIELD

The present disclosure relates to the technical field of traditional Chinese medicine test, and specifically relates to a construction method of a fingerprint chromatogram of a Ju-Ling herbal compound, the fingerprint chromatogram, and use thereof.

### BACKGROUND

The Ju-Ling herbal compound is a highly condensed and summarized experience of Professor Zhang Bing, a nationally renowned veteran doctor of traditional Chinese medicine, for treating Bi syndrome (obstruction syndrome), acute and chronic gouty arthritis, centrally reflecting his integrated treatment approach for metabolic diseases. Professor Zhang Bing believes that although the manifestation of gout occurs in the joints, its essence lies in the fundamental disorder of uric acid metabolism in the body, triggered by external factors. Therefore, its treatment should focus on fortifying the spleen, dispelling dampness to regulate uric acid metabolism, and resolving turbidity and removing impediment to intervene in urate deposition. The Ju-Ling herbal compound consists of *Herba Cichorii, Rhizoma Smilacis Glabrae, Radix Gentiae macrophyllae, Poria,* and *sophora flower-bud* (*Flos Sophorae Immaturus*)*.* Among them, *Herba Cichorii* and *Rhizoma Smilacis Glabrae* fortify the spleen, dispel dampness, resolve turbidity, and free the joints, for regulating uric acid metabolism, serving together as the sovereign drug; *Poria* and *Radix Gentiae macrophyllae* dispel wind-dampness, remove impediment pain, and intervene in gouty inflammatory swelling and pain, serving as minister drugs; *Flos Sophorae Immaturus* clears heat, cools blood, reduces inflammation, and alleviates pain, serving as the adjuvant drug. The whole formula collectively achieves the effects of fortifying the spleen, dispelling dampness, resolving turbidity, reducing uric acid, diminishing swelling, and alleviating pain. Philological and pharmacological studies indicate that this formula contains multiple chemical components that could act on uric acid production, excretion, and inflammatory pathways, possessing the prevention and treatment advantages of multi-component, multi-target, and multi-efficacy. It is a comprehensive anti-gout drug aligned with the modern pathological understanding of gout disease.

Currently, researches on the Ju-Ling herbal compound focuses on clinical application, pharmacological effects, etc., but lacks effective methods for in-depth analysis of the impact of differences in intrinsic efficacy components on the quality of the Ju-Ling herbal compound.

Traditional Chinese medicine (TCM) fingerprint chromatogram is an effective means to identify TCM products and evaluate their product quality. For example, "HPLC fingerprint and chemical pattern recognition method for Cichorium intybus and C. glandulosum" (China Journal of Chinese Materia Medica, Vol. 38, No. 9, pp. 1401-1405) studied the construction method of HPLC fingerprints for *Herba Cichorii* and *Cichorium glandulosum Boiss et Huet* and use of the obtained HPLC fingerprints. However, TCM compounds have complex composition, and the fingerprint construction method for single TCM medicinal material used in the paper is not applicable to TCM compounds. Additionally, in the paper, *Herba Cichorii* and *Cichorium glandulosum Boiss et Huet* are extracted ultrasonically using organic solvent methanol, which is inconsistent with clinical practice.

Therefore, constructing an ultra-high performance liquid chromatography (UHPLC) characteristic fingerprint chromatogram for the Ju-Ling herbal compound, analyzing it through similarity evaluation system for chromatographic fingerprint of TCM, and constructing a reference fingerprint chromatogram to provide a basis for the quality control of the Ju-Ling herbal compound is an urgent problem needed to be solved currently.

### SUMMARY

An object of the present disclosure is to provide a method for constructing a fingerprint chromatogram of a Ju-Ling herbal compound, the fingerprint chromatogram, and use thereof, to achieve a comprehensive, objective, and accurate evaluation of the quality of the Ju-Ling herbal compound.

The present disclosure provides a method for constructing a fingerprint chromatogram of a Ju-Ling herbal compound, including the following steps:
(1) preparing the Ju-Ling herbal compound into a test solution;
(2) preparing a mixed reference substance solution using at least two reference substances selected from the group consisting of chlorogenic acid, 6'-O-β-D-glucosylgentiopicroside, swertiamarin, gentiopicroside, sweroside, 3-O-caffeoylshikimic acid, neoastilbin, astilbin, rutin, isoastilbin, isochlorogenic acid C, quercitrin, kaempferol-3-O-rutinoside, and narcissin; and
(3) separately injecting the test solution and the mixed reference substance solution into a high-performance liquid chromatograph, and performing similarity analysis on chromatograms obtained to obtain the fingerprint chromatogram of the Ju-Ling herbal compound.

In some embodiments, in step (1), an extract powder or an extract paste powder of the Ju-Ling herbal compound is subjected to extraction with methanol, and a resulting supernatant is filtered to obtain a filtrate, the filtrate being the test solution;
in some embodiments, in step (1), the extract powder or the extract paste powder of the Ju-Ling herbal compound is subjected to extraction with 70% methanol, and the resulting supernatant is filtered using a 0.22 µm microporous filter membrane to obtain a filtrate, the filtrate being the test solution.

In some embodiments, in step (2), the mixed reference substance solution is prepared using chlorogenic acid, 6'-O-β-D-glucosylgentiopicroside, swertiamarin, gentiopicroside, sweroside, 3-O-caffeoylshikimic acid, neoastilbin, astilbin, rutin, isoastilbin, isochlorogenic acid C, quercitrin, kaempferol-3-O-rutinoside, and narcissin.

In some embodiments, in step (2), the at least two reference substances are mixed and then dissolved in methanol to obtain the mixed reference substance solution; or the at least two reference substances are separately dissolved in methanol to prepare reference substance solutions, and the reference substance solutions are then mixed to obtain the mixed reference substance solution;
in some embodiments, in step (2), the at least two reference substances are mixed in equal proportions and then dissolved in 70% methanol to obtain the mixed reference substance solution wherein a content of each reference substance is 1 µg/mL; or the at least two reference substances are separately dissolved in 70% methanol to prepare 100 µg/mL reference solutions, and the 100 µg/mL reference substance solutions are then mixed to obtain the mixed reference substance solution wherein a content of each reference substance is 1 µg/mL.

In some embodiments, in step (3), the high-performance liquid chromatograph adopts conditions as follows: a chromatographic column of an ACCQUITY UPLC HSS T3 column; a mobile phase A being methanol, a mobile phase B being a 0.1% aqueous formic acid solution, a flow rate of 0.3 mL/min; a column temperature of 30 °C; a sample injection volume of 2 µL; and a detection wavelength of 300 nm;
in some embodiments, the high-performance liquid chromatograph adopts conditions as follows: the chromatographic column of the ACCQUITY UPLC HSS T3 column with specifications of 2.1 × 100 mm and 1.8 µm.

In some embodiments, in step (3), the high-performance liquid chromatograph adopts elution conditions of:
from minute 0 to minute 2, a volume fraction of the mobile phase A is increased from 5% to 10%, and a volume fraction of the mobile phase B is decreased from 95% to 90%;
from minute 2 to minute 16, the volume fraction of the mobile phase A is increased from 10% to 40%, and the volume fraction of the mobile phase B is decreased from 90% to 60%;
from minute 16 to minute 26, the volume fraction of the mobile phase A is increased from 40% to 54%, and the volume fraction of the mobile phase B is decreased from 60% to 46%;
from minute 26 to minute 26.5, the volume fraction of the mobile phase A is increased from 54% to 95%, and the volume fraction of the mobile phase B is decreased from 46% to 5%;
from minute 26.5 to minute 27.5, the volume fraction of the mobile phase A is 95%, and the volume fraction of the mobile phase B is 5%; and
from minute 27.5 to minute 28, the volume fraction of the mobile phase A is decreased from 95% to 5%, and the volume fraction of the mobile phase B is increased from 5% to 95%.

The present disclosure also provides a fingerprint chromatogram of the Ju-Ling herbal compound obtained by the construction method as described above, wherein the fingerprint chromatogram of the Ju-Ling herbal compound includes 15 fingerprint peaks. Among them, peak 2 has a relative retention time of 9.64 min, and is attributed to a chemical substance of chlorogenic acid; peak 3 has a relative retention time of 10.57 min, and is attributed to a chemical substance of 6'-O-β-D-glucosylgentiopicroside; peak 5 has a relative retention time of 11.51 min, and is attributed to a chemical substance of gentiopicroside; peak 8 has a relative retention time of 16.73 min, and is attributed to a chemical substance of neoastilbin; peak 9 has a relative retention time of 17.16 min, and is attributed to a chemical substance of astilbin; peak 10 has a relative retention time of 18.50 min, and is attributed to a chemical substance of rutin; and peak 11 has a relative retention time of 18.90 min, and is attributed to a chemical substance of isoastilbin.

The present disclosure also provides use of the fingerprint chromatogram of the Ju-Ling herbal compound as described above in identifying and/or evaluating quality of a Ju-Ling herbal compound.

The present disclosure also provides a method for identifying and/or evaluating quality of a Ju-Ling herbal compound, including: comparing a high-performance liquid chromatogram of a Ju-Ling herbal compound to be tested with the fingerprint chromatogram of the Ju-Ling herbal compound as described above, and identifying the Ju-Ling herbal compound to be tested qualified if a similarity is greater than 0.9.

From the above technical solutions, the method for constructing the fingerprint chromatogram of the Ju-Ling herbal compound, the fingerprint chromatogram, and use thereof according to embodiments of the present disclosure have at least the following beneficial effects:
In the present disclosure, based on structural and property characteristics of active ingredients contained in the Ju-Ling herbal compound, including flavonoids, organic acids, iridoid glycosides, etc., chromatographic analysis conditions such as composition of a mobile phase, gradient elution program, detection wavelength, chromatographic column, and column temperature are determined through experiments. Repeated experimental verification shows that the fingerprint chromatogram of the Ju-Ling herbal compound obtained by the construction method according to the present disclosure could comprehensively, objectively, and accurately detect and evaluate the quality of the Ju-Ling herbal compound, which is of great significance for ensuring the safety and efficacy of medications for patients.

In view of complex composition of the Ju-Ling herbal compound, the present disclosure more comprehensively reveals its fingerprint chromatogram through ultra-high performance liquid chromatography (UHPLC), which is a further supplement to the fingerprint chromatogram studies of single herbs *Herba Cichorii* and *Cichorium glandulosum Boiss et Huet.* Additionally, in the present disclosure, the Ju-Ling herbal compound is extracted by water decoction, which is closer to clinical medication.

### BRIEF DESCRIPTION OF THE DRAWINGS

FIG. 1 shows retention times of the common fingerprint peaks of 10 batches of the Ju-Ling herbal compound in Example 1 of the present disclosure.
FIG. 2 shows the reference fingerprint chromatogram obtained using 10 batches of the Ju-Ling herbal compound in Example 1 of the present disclosure.

### DETAILED DESCRIPTION OF THE EMBODIMENTS

To fully understand the objects, features, and efficacy of the present disclosure, the present disclosure is described in detail through the following specific embodiments. In methods of the present disclosure, conventional methods or devices in the art are used except for contents described below. Unless otherwise specified, the technical and scientific terms involved in the present disclosure have the meanings usually understood by those skilled in the art.

In the present disclosure, the term "Ju-Ling herbal compound" refers to a traditional Chinese medicine composition made from raw medicinal materials: *Herba Cichorii, Poria, Rhizoma Smilacis Glabrae,* sophora flower-bud (*Flos Sophorae Immaturus*)*,* and *Radix Gentiae macrophyllae.* In some embodiments, the traditional Chinese medicine composition is made from the following raw medicinal materials: 6-18 parts by weight of *Herba Cichorii,* 5-15 parts by weight of *Poria,* 10-60 parts by weight of *Rhizoma Smilacis Glabrae,* 5-10 parts by weight of *Flos Sophorae Immaturus,* and 3-10 parts by weight of *Radix Gentiae macrophyllae;* preferably, the traditional Chinese medicine composition is made from the following raw medicinal materials: 6-10 parts by weight of *Herba Cichorii,* 10-15 parts by weight of *Poria,* 20-40 parts by weight of *Rhizoma Smilacis Glabrae,* 5-10 parts by weight of *Flos Sophorae Immaturus,* and 3-10 parts by weight of *Radix Gentiae macrophyllae;* most preferably, the traditional Chinese medicine composition is made from the following raw medicinal materials: 9 parts by weight of *Herba Cichorii,* 10 parts by weight of *Poria,* 30 parts by weight of *Rhizoma Smilacis Glabrae,* 6 parts by weight of *Flos Sophorae Immaturus,* and 9 parts by weight of *Radix Gentiae macrophyllae.* Specifically, reference can be made to traditional Chinese medicine compositions recorded in the Chinese invention patent application with application No. 202210821181.9, the entire contents of which are incorporated herein by reference.

The Ju-Ling herbal compound contains multiple chemical components that have effects on uric acid production, excretion, and inflammatory pathways, thereby having multi-component, multi-target, and multi-efficacy prevention and treatment advantages. However, for current traditional Chinese medicine (TCM) compound preparations, there is basically only one or two indicator components in terms of quality control, resulting in single quality control and few indicators. Therefore, existing evaluation methods are difficult to comprehensively reflect the quality status of the Ju-Ling herbal compound composition that has multiple medicinal ingredients and multiple components and targets.

To address these problems, inventors of the present disclosure applied TCM HPLC fingerprint chromatogram technology to the quality evaluation of the Ju-Ling herbal compound. According to characteristics of active ingredients and structural properties of the Ju-Ling herbal compound itself, the chromatographic analysis conditions of the HPLC fingerprint chromatogram technology, such as composition of a mobile phase, gradient elution program, detection wavelength, chromatographic column, and column temperature, are optimized and improved, and matching reference substances are screened. Thus, a method for constructing a fingerprint chromatogram of the Ju-Ling herbal compound is proposed.

In inventors' studies, a ultra-high performance liquid chromatography method instead of a traditional high-performance liquid chromatography method is used to study the fingerprint chromatogram of the Ju-Ling herbal compound. It enables good separation and simultaneous detection of all active components in the compound, and results in more peaks, and more stable peaks.

In a first aspect, the present disclosure provides a method for constructing a fingerprint chromatogram of a Ju-Ling herbal compound, including:(1) preparing the Ju-Ling herbal compound into a test solution; (2) preparing a mixed reference substance solution; and (3) separately injecting the test solution and the mixed reference substance solution into a high-performance liquid chromatograph, and performing similarity analysis on chromatograms obtained to obtain the fingerprint chromatogram of the Ju-Ling herbal compound. Below, the method for constructing the fingerprint chromatogram of the Ju-Ling herbal compound according to the present disclosure is described in detail in conjunction with a specific implementation.
(1) Preparing the Ju-Ling herbal compound into a test solution.

In some embodiments of the present disclosure, an extract powder or an extract paste powder of the Ju-Ling herbal compound is used to prepare the test solution.

In a preferred embodiment, the extract powder of the Ju-Ling herbal compound is used to prepare the test solution. Specifically, a certain amount of an extract powder of the Ju-Ling herbal compound is accurately weighed, placed in a conical flask with a stopper, and 70% methanol is added thereto for extraction; the extraction solution is taken and cooled at room temperature and weighed again, and the lost weight is replenished with 70% methanol solution; the resulting supernatant was filtered through a filter membrane, to obtain a filtrate, i.e., the Ju-Ling herbal compound test solution. A preparation method of the extract powder of the Ju-Ling herbal compound can refer to relevant schemes in the prior art, which is not specifically limited in the present disclosure.

In another preferred embodiment, the extract paste powder of the Ju-Ling herbal compound is used to prepare the test solution. Specifically, the extract paste powder is accurately weighed, placed in a conical flask with a stopper, 70% methanol (v/v) is added thereto to a volume of 10 mL, thereby being diluted to 6 mg/mL; the resulting mixture is shaken, sonicated for 30 minutes, and filtered; the resulting filtrate is taken and filtered through a 0.22 µm microporous filter membrane, to obtain the test solution.

A preparation method of the extract paste powder of the Ju-Ling herbal compound can refer to relevant schemes in the prior art. As an example only, the extract paste powder of the Ju-Ling herbal compound can be prepared as follows: accurately weighing the traditional chinese medicine pieces for decoction of *Herba Cichorii, Radix Gentiae macrophyllae, Flos Sophorae Immaturus, Poria,* and *Rhizoma Smilacis Glabrae* according to the proportion of the Ju-Ling herbal compound, adding water in a weight 12 times the amount of water, soaking for 30 minutes, and then heating for decoction; after boiling, decocting for further 1.5 hours, and filtering; repeating the extraction three times, combining the resulting filtrates after decoction, and concentrating under reduced pressure in a rotary evaporator to a crude raw medicinal material equivalent of 1 g/mL, to obtain the compound water decoction concentrate; and placing the compound concentrate in a water bath at 80 °C and evaporating until it loses fluidity, then placing it in a vacuum drying oven for drying; at a drying temperature of 80 °C, drying continuously for 7 days, then taking it out, naturally cooling to room temperature, and pulverizing to obtain the compound extract paste powder.

(2) Preparing the mixed reference substance solution.

In the present disclosure, according to the characteristics of the active ingredients of the Ju-Ling herbal compound, at least two substances selected from the group consisting of chlorogenic acid, 6'-O-β-D-glucosylgentiopicroside, swertiamarin, gentiopicroside, sweroside, 3-O-caffeoylshikimic acid, neoastilbin, astilbin, rutin, isoastilbin, isochlorogenic acid C, quercitrin, kaempferol-3-O-rutinoside, and narcissin are selected as reference substances. Preferably, chlorogenic acid, 6'-O-β-D-glucosylgentiopicroside, swertiamarin, gentiopicroside, sweroside, 3-O-caffeoylshikimic acid, neoastilbin, astilbin, rutin, isoastilbin, isochlorogenic acid C, quercitrin, kaempferol-3-O-rutinoside, and narcissin are selected as reference substances to prepare the mixed reference substance solution.

In some embodiments of the present disclosure, the at least two reference substances are mixed and then dissolved in methanol to obtain the mixed reference substance solution; or, at least two reference substances are separately dissolved in methanol to prepare reference solutions, and the reference solutions are then mixed to obtain the mixed reference substance solution.

In a preferred embodiment, chlorogenic acid, 6'-O-β-D-glucosylgentiopicroside, swertiamarin, gentiopicroside, sweroside, 3-O-caffeoylshikimic acid, neoastilbin, astilbin, rutin, isoastilbin, isochlorogenic acid C, quercitrin, kaempferol-3-O-rutinoside, and narcissin reference substances are separately accurately weighed, and placed in a volumetric flask, and 70% methanol is added for dissolution to reach a marked volume, followed by shaking well, and a resulting solution is filtered through a microporous filter membrane, to obtain the mixed reference substance solution.

In another preferred embodiment, appropriate amounts of chlorogenic acid, 6'-O-β-D-glucosylgentiopicroside, swertiamarin, gentiopicroside, sweroside, 3-O-caffeoylshikimic acid, neoastilbin, astilbin, rutin, isoastilbin, isochlorogenic acid C, quercitrin, kaempferol-3-O-rutinoside, and narcissin reference substances are separately accurately weighed, and separately dissolved by adding 70% methanol to prepare solutions each having a concentration of about 100 µg per 1 mL (i.e., 100 µg/mL reference solutions). 1 mL of each of the aforementioned reference solutions is precisely measured, and placed in the same 100 mL volumetric flask, and 70% methanol is added to reach a marked volume, followed by shaking well, to obtain the mixed reference substance solution, wherein each 1 mL of the mixed reference substance solution contains 1 µg of each reference substance, meaning that in the mixed reference substance solution, the content of each reference substance is 1 µg/mL.

(3) Injecting the test solution and the mixed reference substance solution into a high-performance liquid chromatograph, performing similarity analysis on chromatograms obtained to obtain the fingerprint chromatogram of the Ju-Ling herbal compound.

In some embodiments of the present disclosure, chromatographic conditions are as follows: a chromatographic column of an ACCQUITY UPLC HSS T3 column, preferably with specifications of an internal diameter of 2.1 mm, a column length of 100 mm, a particle size of 1.8 µm; a mobile phase A being methanol, a mobile phase B being a 0.1% aqueous formic acid solution, a flow rate of 0.3 mL/min; a column temperature of 30 °C; a sample injection volume of 2 µL; and a detection wavelength of 300 nm.

In some embodiments of the present disclosure, gradient elution as shown in table below is performed:

| Time (minute) | Mobile phase A (%) | Mobile phase B (%) |
|---|---|---|
| 0-2 | 5→10 | 95→90 |
| 2-16 | 10→40 | 90→60 |
| 16-26 | 40→54 | 60→46 |
| 26-26.5 | 54→95 | 46→5 |
| 26.5-27.5 | 95 | 5 |
| 27.5-28 | 95→5 | 5→95 |

The chromatogram obtained by high-performance liquid chromatography is imported into the Similarity Evaluation System for Chromatographic Fingerprint of TCM (version 2012.130723) to obtain the fingerprint chromatogram of the Ju-Ling herbal compound.

It should be noted that various substances involved in the construction method according to the present disclosure, such as Chinese medicinal materials, reference substances, etc., can be obtained by commercial purchase.

In a second aspect, the present disclosure provides a fingerprint chromatogram of the Ju-Ling herbal compound, including 15 fingerprint peaks.

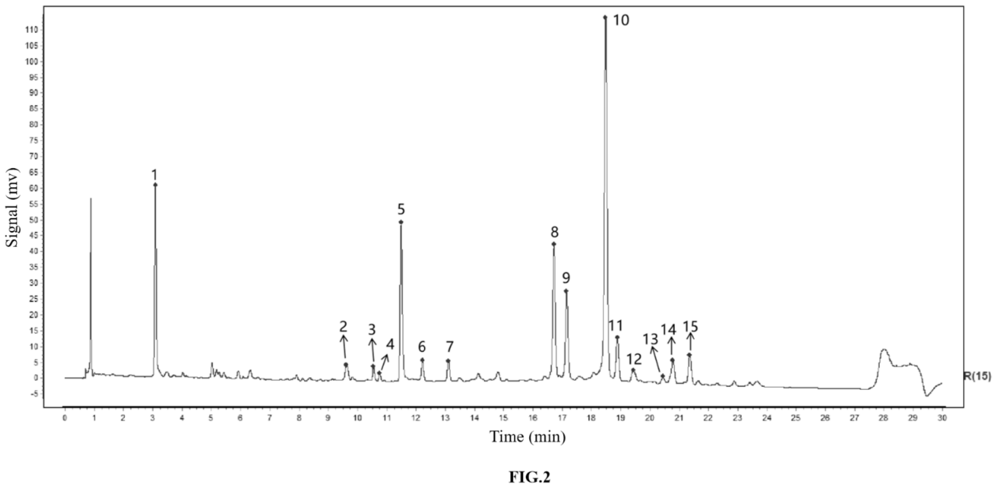

Referring to the numbering in FIG. 2, the key peaks of the fingerprint chromatogram of the Ju-Ling herbal compound according to the present disclosure include fingerprint peaks No. 2, 3, 5, 8, 9, 10, 11, etc. Among them, peak 2 has a relative retention time of 9.64 minutes, and is attributed to a chemical substance of chlorogenic acid; peak 3 has a relative retention time of 10.57 minutes, and is attributed to a chemical substance of 6'-O-β-D-glucosylgentiopicroside; peak 5 has a relative retention time of 11.51 minutes, and is attributed to a chemical substance of gentiopicroside; peak 8 has a relative retention time of 16.73 minutes, and is attributed to a chemical substance of neoastilbin; peak 9 has a relative retention time of 17.16 minutes, and is attributed to a chemical substance of astilbin; peak 10 has a relative retention time of 18.50 minutes, and is attributed to a chemical substance of rutin; and peak 11 has a relative retention time of 18.90 minutes, and is attributed to a chemical substance of isoastilbin.

The fingerprint chromatogram of the Ju-Ling herbal compound according to the present disclosure could be used to comprehensively, objectively, and accurately detect and evaluate the quality of the Ju-Ling herbal compound. Therefore, in a third aspect, the present disclosure provides a method for identifying and/or evaluating the quality of the Ju-Ling herbal compound, including: acquiring the high-performance liquid chromatogram of the Ju-Ling herbal compound to be tested using the aforementioned chromatographic conditions and gradient elution program, comparing the high-performance liquid chromatogram with the fingerprint chromatogram of the Ju-Ling herbal compound according to the present disclosure, and identifying the Ju-Ling herbal compound to be tested qualified if a similarity is greater than 0.9.

### Examples

The present disclosure is further illustrated below by way of examples, but it is not thereby limited to the scope of the examples described. Experimental methods without specified conditions in the following examples were selected according to conventional methods and conditions, or according to the product instructions.

### Example 1: Construction and use of the reference fingerprint chromatogram for the Ju-Ling herbal compound

### 1. Instruments, reagents, and medicinal materials

Waters ACQUITY UPLC H-CLASS ultra-high performance liquid chromatograph, ACCQUITY UPLC HSS T3 chromatographic column; KQ-5200E ultrasonic cleaner (Kunshan Ultrasonic Instrument Co., Ltd., China, at a power of 250 W, and a frequency of 40 kHz), MTW120 electronic balance (Shenzhen Meifu Electronic Co., Ltd., China); pulverizer (Bear Electric Appliance Co., Ltd., China).

Methanol, formic acid (chromatographic grade, Fisher Scientific, USA); distilled water (Watsons Industrial (Hong Kong) Ltd., China); pure water provided by the laboratory.

The pieces for decoction of the 5 medicinal materials in the Ju-Ling herbal compound were collected throughout China, 10 batches per medicinal material. Their origins and batch numbers are shown in Table 1 and Table 2.

**Table 1**

| Batches | Labels | *Poria* | Lot No. | Labels | *Rhizoma Smilacis Glabrae* | Lot No. | Labels | *Flos Sophorae Immaturus* | Lot No. |
|---|---|---|---|---|---|---|---|---|---|
| S1 | F1 | Beijing | H20502 | T1 | Guangdong | 180101 | H1 | Hebei | 20191227 |
| S2 | F2 | Beijing | 221015003 | T2 | Beijing | 220418001 | H2 | Beijing | 190409004 |
| S3 | F3 | Anhui | 20210324 | T3 | Guangdong | 01050901 | H3 | Hebei | 20210513 |
| S4 | F4 | Anhui | H20901 | T4 | Guangdong | 20210401 | H4 | Hebei | 93430801 |
| S5 | F5 | Anhui | 220201 | T5 | Guangdong | 21112017 | H5 | Hebei | C23011202 |
| S6 | F6 | Anhui | 22110201 | T6 | Guangdong | 22083102 | H6 | Hebei | C22080603 |
| S7 | F7 | Beijing | 22011901 | T7 | Beijing | 20220813 | H7 | Hebei | 539200601 |
| S8 | F8 | Hunan | 194221001 | T8 | Hunan | 220602 | H8 | Hebei | C22081906 |
| S9 | F9 | Yunnan | 221017002 | T9 | Guangdong | 1907096 | H9 | Hebei | 2001049 |
| S10 | F10 | Yunnan | 220417 | T10 | Guangdong | 20220813 | H10 | Hebei | C22092216 |

**Table 2**

| Batches | Labels | *Radix Gentiae macrophyllae* | Lot No. | Labels | *Herba Cichorii* | Lot No. |
|---|---|---|---|---|---|---|
| S1 | Q1 | Beijing | 180101 | J1 | Xinjiang | 181201 |
| S2 | Q2 | Beijing | 90850601 | J2 | Xinjiang | 20200326 |
| S3 | Q3 | Gansu | 00851201 | J3 | Xinjiang | 20201031 |
| S4 | Q4 | Gansu | 20210415 | J4 | Xinjiang | 20200329 |
| S5 | Q5 | Gansu | 200604004 | J5 | Xinjiang | 20210801 |
| S6 | Q6 | Inner Mongolia | 211206002 | J6 | Xinjiang | 20210807 |
| S7 | Q7 | Beijing | 20201004 | J7 | Xinjiang | 20210403 |
| S8 | Q8 | Gansu | 20112303 | J8 | Xinjiang | 20210813 |
| S9 | Q9 | Yunnan | 220302 | J9 | Liaoning | 20200327 |
| S10 | Q10 | Gansu | 20220107 | J10 | Anhui | 20200328 |

### 2. Construction of the fingerprint chromatogram of the Ju-Ling herbal compound

### (1) Preparation of test solution

The pieces for decoction from batches S1 to S10 in Table 1 and Table 2 were accurately weighed according to 9 g of *Herba Cichorii,* 10 g of *Poria,* 30 g of *Rhizoma Smilacis Glabrae,* 6 g of *Flos Sophorae Immaturus,* and 9 g of *Radix Gentiae macrophyllae,* to obtain 10 batches of test samples. These 10 batches of test samples were separately subjected to the following procedures:

After adding water in an amount twelve times that of pieces for decoction, a batch of test sample was soaked for 30 minutes, and then heated for decoction. After boiling, the batch of test sample was decocted for 1.5 hours followed by filtration. The extraction was repeated three times, and the decoction liquids were combined. The combined decoction liquid was concentrated under reduced pressure in a rotary evaporator to a crude raw medicinal material equivalent of 1 g/mL, to obtain the compound water decoction concentrate. The compound concentrate was placed in a water bath at 80 °C and evaporated until it lost fluidity. The residue after evaporation was then placed in a vacuum drying oven, and dried at a drying temperature of 80 °C for continuous 7 days. The dried product was taken out, naturally cooled to room temperature, and pulverized to obtain the compound extract paste powder.

The extract paste powder was accurately weighed, placed in a conical flask with a stopper, and 70% methanol was added thereto to reach a marked volume of 10 mL, thereby diluting to 6 mg/mL; the resulting solution was shaken, sonicated for 30 minutes, and then filtered through a 0.22 µm microporous filter membrane to obtain the test solution.

### (2) Preparation of a mixed reference substance solution

Appropriate amounts of chlorogenic acid, 6'-O-β-D-glucosylgentiopicroside, swertiamarin, gentiopicroside, sweroside, 3-O-caffeoylshikimic acid, neoastilbin, astilbin, rutin, isoastilbin, isochlorogenic acid C, quercitrin, kaempferol-3-O-rutinoside, and narcissin reference substances were separately accurately weighed. These reference substances were separately dissolved in 70% methanol to prepare solutions each having a concentration of about 100 µg per 1 mL. 1 mL of each of the aforementioned reference solutions was precisely measured, and placed in the same 100 mL volumetric flask; 70% methanol was then added thereto to reach a marked volume, followed by shaking well, to obtain the mixed reference substance solution (each 1 mL contained 1 µg of each reference substance).

### (3) Determination of the Ju-Ling herbal compound fingerprint chromatogram by ultra-high performance liquid chromatography

The test solutions of the 10 batches of the Ju-Ling herbal compound prepared in step (1) and the mixed reference substance solution prepared in step (2) were separately injected into the high-performance liquid chromatograph.

Chromatographic conditions: a chromatographic column of an ACCQUITY UPLC HSS T3 column (an internal diameter of 2.1 mm, a column length of 100 mm, and a particle size of 1.8 µm); a mobile phase A being methanol, a mobile phase B being a 0.1% aqueous formic acid solution, a flow rate of 0.3 mL/min; a column temperature of 30 °C; a sample injection volume of 2 µL; and a detection wavelength of 300 nm. Gradient elution was carried out according to the program shown in table below.

| Time (min) | Mobile phase A (%) | Mobile phase B (%) |
|---|---|---|
| 0-2 | 5→10 | 95→90 |
| 2-16 | 10→40 | 90→60 |
| 16-26 | 40→54 | 60→46 |
| 26-26.5 | 54→95 | 46→5 |
| 26.5-27.5 | 95 | 5 |
| 27.5-28 | 95→5 | 5→95 |

The obtained fingerprint chromatograms of the test solutions of the 10 batches of the Ju-Ling herbal compound were exported and then imported into the Similarity Evaluation System for Chromatographic Fingerprint of TCM (version 2012.130723): chromatographic peaks that existed in all chromatograms of 10 batches of Ju-Ling herbal compound and had relatively high content were selected as common peaks; the reference fingerprint chromatogram of the Ju-Ling herbal compound was generated by using a median method; and the relative retention time and relative peak area of each common peak were calculated. 15 common fingerprint peaks were confirmed in the reference fingerprint chromatogram (The 10 batches of test solutions all had a similarity greater than 0.90).

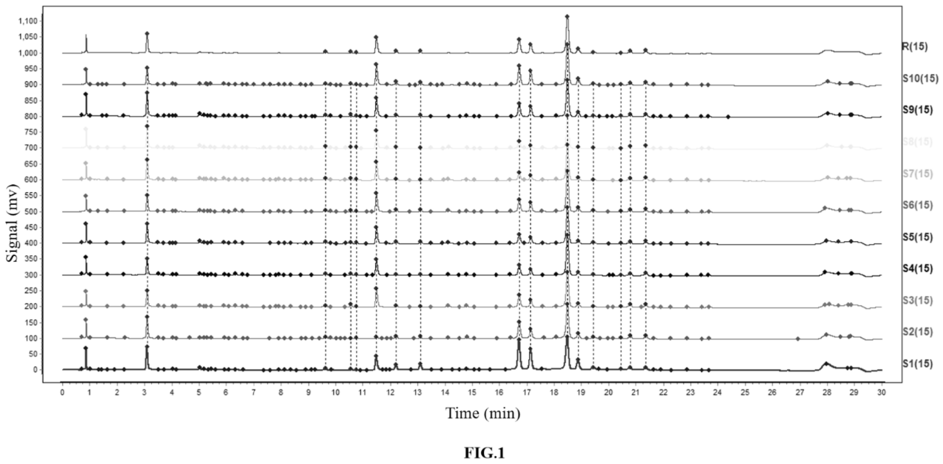

The retention times of the 15 common fingerprint peaks are shown in FIG. 1, and the reference fingerprint chromatogram obtained in this example is shown in FIG. 2.

### Example 2: Methodology investigation

### 1. Precision experiment

The powder of the same batch of the Ju-Ling herbal compound was precisely taken. The test solution was prepared according to the step (1) of Example 1. Injection was performed 6 times repeatedly according to the chromatographic conditions in step (3) of Example 1. The RSD values of the peak areas of common peaks 1, 2, 3, 5, 6, 7, 8, 10 were calculated, all being <4.0%, and the RSD of retention times was calculated, all being <1.0%, thereby proving good instrument precision.

### 2. Repeatability test

The powder of the same batch of the Ju-Ling herbal compound was precisely taken. Six test solution samples were prepared in parallel according to the step (1) of Example 1. Injection was performed 6 times according to the chromatographic conditions in step (3) of Example 1. The RSD values of the peak areas of common peaks 1, 2, 3, 5, 6, 7, 8, 10 were calculated, all being <3.5%, and the RSD of retention times was calculated, all being <1.0%, thereby proving good repeatability of the method.

### 3. Stability test

The powder of the same batch of the Ju-Ling herbal compound was precisely taken. The test solution was prepared according to the step (1) of Example 1. Injection and analysis were performed according to the chromatographic conditions in step (3) of Example 1 at 0 h, 1 h, 2 h, 5 h, 12 h, and 24 h after sample preparation. The RSD values of the peak areas of common peaks 1, 2, 3, 5, 6, 7, 8, 10 were calculated, all being <3.5%, and the RSD of retention times was calculated, all being <1.0%, thereby proving good stability of the test solution within 24 h.

Through the above researches, it was confirmed that the UHPLC fingerprint chromatogram of the Ju-Ling herbal compound had been constructed using fingerprint chromatogram technology, which could quickly and intuitively identify the pharmacodynamic substance basis in a complex TCM decoction system; simultaneously, in combination with chemical recognition patterns such as grey relational analysis and partial least squares analysis, the quality differences between batches of samples were evaluated. References for the study of key quality attributes of the Ju-Ling herbal compound are provided, and beneficial references for the subsequent preparation process, quality control, and evaluation of product safety and stability of related preparations are provided.

Finally, it should be noted that the above examples are only specific embodiments of the present disclosure. Of course, those skilled in the art could make modifications and variations to the present disclosure. If these modifications and variations fall within the scope of the claims of the present disclosure and their equivalent technologies, they should be deemed as falling within the scope of the present disclosure.

## Claims

1. A construction method of a fingerprint chromatogram of a Ju-Ling herbal compound, comprising:
(1) preparing the Ju-Ling herbal compound into a test solution;
(2) preparing a mixed reference substance solution using at least two reference substances selected from the group consisting of chlorogenic acid, 6'-O-β-D-glucosylgentiopicroside, swertiamarin, gentiopicroside, sweroside, 3-O-caffeoylshikimic acid, neoastilbin, astilbin, rutin, isoastilbin, isochlorogenic acid C, quercitrin, kaempferol-3-O-rutinoside, and narcissin; and
(3) separately injecting the test solution and the mixed reference substance solution into a high-performance liquid chromatograph, and performing similarity analysis on chromatograms obtained to obtain the fingerprint chromatogram of the Ju-Ling herbal compound.

2. The construction method as claimed in claim 1, wherein in step (1), an extract powder or an extract paste powder of the Ju-Ling herbal compound is subjected to extraction with methanol, and a resulting supernatant is filtered to obtain a filtrate, the filtrate being the test solution;
preferably, in step (1), the extract powder or the extract paste powder of the Ju-Ling herbal compound is subjected to extraction with 70% methanol, and the resulting supernatant is filtered through a 0.22 µm microporous filter membrane to obtain a filtrate, the filtrate being the test solution.

3. The construction method as claimed in claim 1, wherein in step (2), the mixed reference substance solution is prepared using chlorogenic acid, 6'-O-β-D-glucosylgentiopicroside, swertiamarin, gentiopicroside, sweroside, 3-O-caffeoylshikimic acid, neoastilbin, astilbin, rutin, isoastilbin, isochlorogenic acid C, quercitrin, kaempferol-3-O-rutinoside, and narcissin.

4. The construction method as claimed in claim 3, wherein in step (2), reference substances are mixed and then dissolved in methanol to obtain the mixed reference substance solution; or the reference substances are separately dissolved in methanol to prepare reference substance solutions, and the reference substance solutions are then mixed to obtain the mixed reference substance solution;
preferably, in step (2), the reference substances are mixed in equal proportions and then dissolved in 70% methanol to obtain the mixed reference substance solution wherein a content of each reference substance is 1 µg/mL; or the reference substances are separately dissolved in 70% methanol to prepare 100 µg/mL reference solutions, and the 100 µg/mL reference substance solutions are then mixed to obtain the mixed reference substance solution wherein a content of each reference substance is 1 µg/mL.

5. The construction method as claimed in claim 1, wherein in step (3), the high-performance liquid chromatograph adopts conditions as follows: a chromatographic column of an ACCQUITY UPLC HSS T3 column; a mobile phase A being methanol, a mobile phase B being a 0.1% aqueous formic acid solution, a flow rate of 0.3 mL/min; a column temperature of 30 °C; a sample injection volume of 2 µL; and a detection wavelength of 300 nm;
preferably, the high-performance liquid chromatograph adopts conditions as follows: the chromatographic column of the ACCQUITY UPLC HSS T3 column with specifications of 2.1×100 mm and 1.8 µm.

6. The construction method as claimed in claim 5, wherein in step (3), the high-performance liquid chromatograph adopts elution conditions of:
from minute 0 to minute 2, a volume fraction of the mobile phase A is increased from 5% to 10%, and a volume fraction of the mobile phase B is decreased from 95% to 90%;
from minute 2 to minute 16, the volume fraction of the mobile phase A is increased from 10% to 40%, and the volume fraction of the mobile phase B is decreased from 90% to 60%;
from minute 16 to minute 26, the volume fraction of the mobile phase A is increased from 40% to 54%, and the volume fraction of the mobile phase B is decreased from 60% to 46%;
from minute 26 to minute 26.5, the volume fraction of the mobile phase A is increased from 54% to 95%, and the volume fraction of the mobile phase B is decreased from 46% to 5%;
from minute 26.5 to minute 27.5, the volume fraction of the mobile phase A is 95%, and the volume fraction of the mobile phase B is 5%; and
from minute 27.5 to minute 28, the volume fraction of the mobile phase A is decreased from 95% to 5%, and the volume fraction of the mobile phase B is increased from 5% to 95%.

7. A fingerprint chromatogram of the Ju-Ling herbal compound obtained by the construction method as claimed in any one of claims 1 to 6, wherein the fingerprint chromatogram of the Ju-Ling herbal compound comprises 15 fingerprint peaks.

8. The fingerprint chromatogram of the Ju-Ling herbal compound as claimed in claim 7, wherein
peak 2 has a relative retention time of 9.64 minutes, and is attributed to a chemical substance of chlorogenic acid;
peak 3 has a relative retention time of 10.57 minutes, and is attributed to a chemical substance of 6'-O-β-D-glucosylgentiopicroside;
peak 5 has a relative retention time of 11.51 minutes, and is attributed to a chemical substance of gentiopicroside;
peak 8 has a relative retention time of 16.73 minutes, and is attributed to a chemical substance of neoastilbin;
peak 9 has a relative retention time of 17.16 minutes, and is attributed to a chemical substance of astilbin;
peak 10 has a relative retention time of 18.50 minutes, and is attributed to a chemical substance of rutin; and
peak 11 has a relative retention time of 18.90 minutes, and is attributed to a chemical substance of isoastilbin.

9. Use of the fingerprint chromatogram of the Ju-Ling herbal compound as claimed in claim 7 or 8 in identifying and/or evaluating quality of a Ju-Ling herbal compound.

10. A method for identifying and/or evaluating quality of a Ju-Ling herbal compound to be tested, comprising:
comparing a high-performance liquid chromatogram of the Ju-Ling herbal compound to be tested with the fingerprint chromatogram of the Ju-Ling herbal compound as claimed in claim 7 or 8, and
identifying the Ju-Ling herbal compound to be tested qualified if a similarity is greater than 0.9.
